(19) **Europäisches Patentamt**
**European Patent Office**
**Office européen des brevets**

(11)  **EP 4 606 838 A1**

(12)  **EUROPEAN PATENT APPLICATION**
published in accordance with Art. 153(4) EPC

(43) Date of publication:
**27.08.2025 Bulletin 2025/35**

(51) International Patent Classification (IPC):
**C08G 63/199** *(2006.01)*     **C08G 63/183** *(2006.01)*
**C08G 63/672** *(2006.01)*

(21) Application number: **24737859.9**

(22) Date of filing: **12.03.2024**

(86) International application number:
**PCT/KR2024/003190**

(87) International publication number:
**WO 2025/150612 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.01.2024 KR 20240004968**

(71) Applicant: **SK Chemicals Co., Ltd.**
**Gyeonggi-do 13494 (KR)**

(72) Inventors:
• **OH, Hyun-Woo**
  **Seongnam-si, Gyeonggi-do 13494 (KR)**
• **MOON, Jung-Me**
  **Seongnam-si, Gyeonggi-do 13494 (KR)**
• **LEE, Yoo Jin**
  **Seongnam-si, Gyeonggi-do 13494 (KR)**
• **HWANG, Da-Young**
  **Seongnam-si, Gyeonggi-do 13494 (KR)**

(74) Representative: **Dehns**
  **10 Old Bailey**
  **London EC4M 7NG (GB)**

(54)  **POLYESTER RESIN AND ARTICLE MANUFACTURED THEREFROM**

(57)    The present invention relates to a polyester resin, which comprises a diol repeat unit derived from a diol component; and a dicarboxylic acid repeat unit derived from a dicarboxylic acid component, wherein when a value of tan δ is measured through dynamic mechanical analysis (DMA), the temperature at the maximum value of tan δ (tan δ peak) is 100°C or higher, and the content and composition of 1,4-cyclohexanedimethanol contained in the diol component is controlled, and to an article prepared from the polyester resin.

EP 4 606 838 A1

## Description

### Technical Field

The present invention relates to a polyester resin that has excellent recovery from strain that occurs at high temperatures, thereby having high thermal resistance and mechanical strength, and to an article prepared using the polyester resin.

### Background Art

Polyester resins, among polymers, are widely used as a material for containers for beverages or food, various packaging films or sheets, interior and exterior materials such as panels, shelves, and partitions, and the like.

In particular, polyester resins used in the manufacture of articles such as food containers or packaging films are required to have high thermal resistance and mechanical strength. Specifically, articles manufactured from the polyester resins must have thermal resistance to a level that can be used in microwave ovens and dishwashers operated at high temperatures and impact strength to an extent that does not break even when subjected to external impact.

In order to increase the thermal resistance and mechanical strength of a polyester resin, techniques of blending the polyester resin with other resins or adding specific additives thereto have been proposed. However, the above techniques have limitations in simultaneously enhancing the thermal resistance and mechanical strength of a polyester resin and causing problems such as increased manufacturing costs, decreased process efficiency, and decreased color characteristics (e.g., transparency).

Accordingly, there is a need to develop a technology that can efficiently increase the thermal resistance and mechanical strength of a polyester resin.

Meanwhile, plastic products manufactured using a polyester resin or the like emits greenhouse gases during the stages of raw material collection, manufacturing, distribution, use, and disposal. Since these greenhouse gases are the main cause of global warming, environmentally friendly plastic technologies are needed to reduce the amount of greenhouse gases generated.

### Disclosure of Invention

### Technical Problem

Unlike conventional techniques in which different resins are blended or specific additives are used, the present inventors have discovered that a polyester resin with high thermal resistance and mechanical strength could be obtained simply by controlling the polymerization raw material of the polyester resin. Specifically, it has been discovered that if a specific diol composition is employed during the preparation of a polyester resin, when the polyester resin is placed under a high-temperature environment, whereby strain takes place, rapid recovery from the strain is possible; and such rapid recovery significantly increases the thermal resistance and mechanical strength of the polyester resin. In addition, as a specific diol composition is employed, a polyester resin with minimized emissions of greenhouse gases can be obtained.

Accordingly, an object of the present invention is to provide an environmentally friendly polyester resin that has excellent recovery from strain that occurs at high temperatures, thereby having high thermal resistance and mechanical strength, and an article prepared using the polyester resin.

### Solution to Problem

In order to accomplish the above object, the present invention provides a polyester resin that comprises a diol repeat unit derived from a diol component; and a dicarboxylic acid repeat unit derived from a dicarboxylic acid component, wherein when a value of $\tan \delta$ is measured through dynamic mechanical analysis (DMA), the temperature at the maximum value of $\tan \delta$ ($\tan \delta$ peak) is 100°C or higher, and the following Equation 1 is satisfied:

$$[\text{Equation 1}]$$
$$30 \leq X \times Y \leq 60$$

In Equation 1, X is the percent by mole of 1,4-cyclohexanedimethanol (CHDM) based on 100% by mole of the diol component, and Y is the molar ratio of trans-1,4-cyclohexanedimethanol (trans-CHDM) to the 1,4-cyclohexanedimethanol (CHDM).

In addition, the present invention provides an article that is prepared from the polyester resin.

**Advantageous Effects of Invention**

As the polyester resin according to the present invention is obtained by using a diol component comprising 1,4-cyclohexanedimethanol with a specific composition as a polymerization raw material, it has physical properties controlled to a specific range (i.e., $X \times Y$, tan $\delta$ peak temperature, strain recovery (SR), $T_m$, impact strength, and the like). As a result, it has excellent recovery from strain that occurs at high temperatures, whereby it can have high thermal resistance and mechanical strength, as well as excellent moldability. In addition, as the polyester resin according to the present invention is obtained by using a diol component comprising isosorbide as a polymerization raw material, it is possible to minimize the emissions of greenhouse gases such as carbon dioxide ($CO_2$) during the procedure of manufacturing articles and using and discarding the manufactured articles.

Accordingly, when articles are manufactured using the polyester resin according to the present invention, it is possible to produce articles that have excellent thermal resistance and mechanical strength and are environmentally friendly with high efficiency.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

In the present specification, a singular expression is interpreted to cover a plural number as well unless otherwise specified in the context.

**Polyester resin**

The polyester resin according to the present invention comprises a diol repeat unit derived from a diol component; and a dicarboxylic acid repeat unit derived from a dicarboxylic acid component, wherein when a value of tan $\delta$ is measured through dynamic mechanical analysis (DMA), the temperature at the maximum value of tan $\delta$ (tan $\delta$ peak) is 100°C or higher, and the following Equation 1 is satisfied:

$$[\text{Equation 1}]$$

$$30 \leq X \times Y \leq 60$$

In Equation 1, X is the percent by mole of 1,4-cyclohexanedimethanol (CHDM) relative to 100% by mole of the diol component, and Y is the molar ratio of trans-1,4-cyclohexanedimethanol (trans-CHDM) to the 1,4-cyclohexanedimethanol (CHDM).

Equation 1 shows the correlation between the mole percent of 1,4-cyclohexanedimethanol in the total diol component and the molar ratio of trans-1,4-cyclohexanedimethanol (trans-CHDM) in the 1,4-cyclohexanedimethanol. In the polyester resin according to the present invention, the value ($X \times Y$) obtained by multiplying the value of mole percent and the value of molar ratio (excluding the unit) satisfies the range of 30 to 60. Specifically, X may refer to the percent by mole of 1,4-cyclohexanedimethanol contained in the diol component based on 100% by mole of the diol component, and Y may refer to the ratio of the amount of trans-1,4-cyclohexanedimethanol contained in the total amount of 1,4-cyclohexanedimethanol.

If the value of $X \times Y$ in Equation 1 is less than 30 or greater than 60, the glass transition temperature ($T_g$) and melting point ($T_m$), which are highly related to the thermal resistance of a polyester resin, do not reach the desired level, whereby it is not possible to obtain a polyester resin with high thermal resistance and excellent moldability and to achieve enhancement of mechanical strength and processability of the polyester resin. However, since the polyester resin according to the present invention satisfies the above Equation 1, it can have high thermal resistance and mechanical strength, along with excellent moldability.

According to the present invention, the value of $X \times Y$ in Equation 1 may specifically be 31 or more, 32 or more, 33 or more, 35 or more, 38 or more, 40 or more, 43 or more, 45 or more, 48 or more, 50 or more, or 52 or more, and 59 or less, 57 or less, 55 or less, 52 or less, 50 or less, 48 or less, 45 or less, 43 or less, 40 or less, or 35 or less (e.g., 31 to 59, 32 to 59, 33 to 58, 33 to 57, 34 to 55, 35 to 54, 36 to 52, 38 to 50, or 40 to 47).

According to the present invention, in the polyester resin, when a value of tan $\delta$ is measured through dynamic mechanical analysis (DMA), the temperature at the maximum value of tan $\delta$ (tan $\delta$ peak) may specifically be 103°C or higher, 105°C or higher, 108°C or higher, 110°C or higher, or 113°C or higher, and 120°C or lower, 118°C or lower, 116°C or lower, or 115°C or lower (e.g., 100 to 120°C, 101 to 119°C, 102 to 119°C, 104 to 118°C, 107 to 117°C, 108 to 116°C, or 110 to 115°C). As the temperature at the maximum value of tan $\delta$ (tan $\delta$ peak) is within the above range, a polyester resin with high thermal resistance can be provided.

According to the present invention, when the polyester resin is analyzed by differential scanning calorimetry (DSC), its melting point ($T_m$) may not appear (may not be measured). Alternatively, the polyester resin may have a melting temperature ($T_m$) of 250°C or lower when measured by DSC. Specifically, the melting temperature ($T_m$) of the polyester resin may be 248°C or lower, 246°C or lower, 244°C or lower, 242°C or lower, 240°C or lower, 238°C or lower, or 235°C or lower (e.g., 225 to 250°C, 230 to 250°C, 231 to 249°C, 233 to 248°C, 234 to 247°C, or 235 to 245°C). As the melting point ($T_m$) of the polyester resin does not appear or is 250°C or lower, moldability, along with thermal resistance, of the polyester resin can be secured. In particular, if the melting point ($T_m$) of the polyester resin exceeds 250°C, the crystallinity of the polyester resin may become excessively high, whereby the moldability may be significantly deteriorated. Thus, the melting point ($T_m$) of the polyester resin is preferably 250°C or lower.

Here, when the melting point ($T_m$) of the polyester resin appears during the DSC analysis, the heat of fusion ($\Delta H$) at the melting point ($T_m$) may specifically be 30 J/g or less, 25 J/g or less, 23 J/g or less, 20 J/g or less, 18 J/g or less, 15 J/g or less, 13 J/g or less, 10 J/g or less, or 5 J/g or less (e.g., greater than 0 to 30 J/g, 1 to 25 J/g, 2 to 20 J/g, 3 to 15 J/g, or 5 to 13 J/g).

In addition, when the polyester resin is analyzed by differential scanning calorimetry (DSC), its glass transition temperature ($T_g$) may exceed 100°C. Specifically, the glass transition temperature ($T_g$) may be 101°C or higher, 102°C or higher, 103°C or higher, 104°C or higher, or 105°C or higher, and 125°C or lower, 123°C or lower, 120°C or lower, 118°C or lower, 115°C or lower, 112°C or lower, or 110°C or lower (e.g., greater than 100 to 125°C, 101 to 123°C, 102 to 120°C, 103 to 118°C, 105 to 115°C, or 107 to 113°C). As the glass transition temperature ($T_g$) of the polyester resin is within the above range, when the strain of the polyester resin occurs at high temperatures, recovery of the polyester resin from the strain over time may be rapid. As a result, the polyester resin can have high thermal resistance and mechanical strength.

According to the present invention, the polyester resin may have strain recovery (SR) controlled to a specific range. Specifically, when a specimen having a thickness of 1 mm prepared from the polyester resin is subjected to dynamic mechanical analysis (DMA), the strain recovery (SR) according to the following Equation 2 may exceed 45%.

[Equation 2]

$$SR\ (\%) = \{1 - (S_2 - S_0/S_1 - S_0)\} \times 100$$

In Equation 2, $S_0$ is the initial length of a specimen having a thickness of 1 mm prepared from the polyester resin, $S_1$ is the length of the specimen measured when the specimen is maintained for 3 minutes with a force applied such that the length of the specimen is stretched by 3% at a temperature of the glass transition temperature ($T_g$) of the polyester resin less 30°C ($T_g$ - 30°C), and $S_2$ is the length of the specimen measured after the force applied to the specimen is removed, and the specimen is then left for 5 minutes.

Specifically, the strain recovery (SR) according to the above Equation 2 may be 46% or more, 48% or more, 50% or more, 51% or more, 53% or more, 55% or more, 58% or more, 60% or more, 61% or more, 63% or more, 65% or more, 68% or more, or 70% or more (e.g., greater than 45 to 70%, 46 to 69%, 47 to 68%, 49 to 66%, 50 to 65%, or 52 to 63%). As the strain recovery (SR) is within the above range, the polyester resin has excellent recovery from strain occurring at high temperatures, thereby providing a polyester resin with high mechanical strength.

As the content of 1,4-cyclohexanedimethanol contained in the diol component increases, or the ratio of trans-1,4-cyclohexanedimethanol (trans-CHDM) in the 1,4-cyclohexanedimethanol increases, the strain recovery (SR) tends to increase proportionally. In light of this, the present invention is characterized in that, to increase the strain recovery (SR) to obtain a polyester resin with excellent thermal resistance and mechanical strength, the content of 1,4-cyclohexanedimethanol and the ratio of trans-1,4-cyclohexanedimethanol (trans-CHDM) in 1,4-cyclohexanedimethanol are controlled. Here, the 1,4-cyclohexanedimethanol may refer to virgin 1,4-cyclohexanedimethanol (virgin CHDM), recycled 1,4-cyclohexanedimethanol (recycled CHDM), or a combination thereof.

According to the present invention, the polyester resin comprises a dicarboxylic acid repeat unit derived from a dicarboxylic acid component. The dicarboxylic acid component is not particularly limited as long as it is a commonly known dicarboxylic acid component. Specifically, it may comprise at least one selected from the group consisting of terephthalic acid, recycled terephthalic acid, dimethyl terephthalic acid, isophthalic acid, dimethyl terephthalate, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, 2,6-naphthalenedicarboxylic acid, diphenyldicarboxylic acid, 4,4'-stilbenedicarboxylic acid, 2,5-furandicarboxylic acid, and 2,5-thiophenedicarboxylic acid. For example, the dicarboxylic acid may comprise terephthalic acid, isophthalic acid, dimethyl terephthalate, or a combination thereof.

According to the present invention, the polyester resin comprises a diol repeat unit derived from a diol component. The diol component is not particularly limited as long as it is a commonly known diol component. Specifically, it may comprise at least one (e.g., two or more, three or more, or four or more) selected from the group consisting of ethylene glycol, recycled ethylene glycol, diethylene glycol, recycled diethylene glycol, 1,4-cyclohexanedimethanol, recycled 1,4-cyclohexanedimethanol, isosorbide, recycled isosorbide, bis-2-hydroxyethyl terephthalate, recycled bis-2-hydroxyethyl terephthalate, triethylene glycol, 1,2-propanediol, 1,3-propanediol, 1,4-propanediol, 1,5-pentanediol, 1,6-hexanediol, 1,8-octanediol, 2-methyl-1,3-propanediol, neopentyl glycol, 2,2,4,4-tetramethyl-1,3-cyclobutanediol, and their derivatives.

For example, the diol component may essentially comprise 1,4-cyclohexanedimethanol or recycled 1,4-cyclohexanedimethanol. The content of the 1,4-cyclohexanedimethanol or the recycled 1,4-cyclohexanedimethanol contained in the diol component is not particularly limited, but it may be 10 to 90% by mole, specifically, 15 to 85% by mole, 20 to 80% by mole, 25 to 78% by mole, 30 to 75% by mole, 35 to 74% by mole, 40 to 73% by mole, 45 to 72% by mole, or 50 to 70% by mole, based on 100% by mole of the diol component. As the content of the 1,4-cyclohexanedimethanol or the recycled 1,4-cyclohexanedimethanol is within the above range, it is possible to obtain a polyester resin whose strain recovery (SR) according to Equation 2 is controlled to the desired range. As a result, a polyester resin with excellent thermal resistance and mechanical strength can be provided.

According to the present invention, 1,4-cyclohexanedimethanol comprises trans-1,4-cyclohexanedimethanol (trans-CHDM) as an isomer in a trans structure and cis-1,4-cyclohexanedimethanol (cis-CHDM) as an isomer in a cis structure. The present invention can provide a polyester resin with significantly enhanced thermal resistance and mechanical strength by controlling the ratio of trans-CHDM to a high level. Specifically, the 1,4-cyclohexanedimethanol may comprise the trans-CHDM and the cis-CHDM at a content ratio (molar ratio) of 60:40 to 85:15. For example, the content ratio of the trans-CHDM to the cis-CHDM may be 62:38 to 83:17, 64:36 to 81:19, 65:35 to 80:20, 66:34 to 79:21, or 67:33 to 78:22. For example, the content of trans-CHDM contained in the 1,4-cyclohexanedimethanol may be 60 to 85% by mole, 62 to 83% by mole, 64 to 81% by mole, 65 to 80% by mole, 66 to 79% by mole, or 67 to 78% by mole, based on 100% by mole of the 1,4-cyclohexanedimethanol. In addition, the content of cis-CHDM contained in the 1,4-cyclohexanedimethanol may be 15 to 40% by mole, 17 to 38% by mole, 19 to 36% by mole, 20 to 35% by mole, 21 to 34% by mole, or 22 to 33% by mole, based on 100% by mole of the 1,4-cyclohexanedimethanol. As the content ratio (molar ratio) is within the above range, a polyester resin with excellent thermal resistance, mechanical strength, and strain recovery at high temperatures can be provided.

The 1,4-cyclohexanedimethanol may be obtained by isomerizing 1,4-cyclohexanedimethanol, which has a low content of cis-CHDM, by a conventional method to increase the content of trans-CHDM. In addition, the 1,4-cyclohexanedimethanol may be obtained by separating the cis-CHDM component using a conventional method to intentionally increase the content of trans-CHDM. For example, the 1,4-cyclohexanedimethanol may be obtained by a method of increasing the content of trans-CHDM by adding an alkaline catalyst to 1,4-cyclohexanedimethanol and applying heat thereto, a method of separating 1,4-cyclohexanedimethanol comprising trans-CHDM and cis-CHDM using the difference in boiling points thereof, or a method of increasing the content of trans-CHDM through a hydrogenation reaction of 1,4-cyclohexanedicarboxylic acid dialkyl ester.

Meanwhile, the diol component may comprise at least one (two or more or three or more) selected from the group consisting of ethylene glycol, recycled ethylene glycol, isosorbide, recycled isosorbide, bis-2-hydroxyethyl terephthalate, recycled bis-2-hydroxyethyl terephthalate, and 2,2,4,4-tetramethyl-1,3-cyclobutanediol, as a comonomer, along with the 1,4-cyclohexanedimethanol. As the diol component comprises the comonomer, a polyester resin with excellent thermal resistance and mechanical strength, along with environmental friendliness, can be provided. In particular, isosorbide is a biomaterial produced through a chemical process based on ingredients derived from plant resources such as corn. It has a lower sensitivity to global warming potential (GWP) than other dicarboxylic acid components (e.g., terephthalic acid) or other diol components; thus, polyester resins prepared using the same may have significantly lower emissions of greenhouse gases.

The content of the ethylene glycol or the recycled ethylene glycol contained in the diol component is not particularly limited, but it may be 1 to 70% by mole, specifically, 5 to 65% by mole, 7 to 60% by mole, 9 to 55% by mole, 11 to 50% by mole, or 13 to 45% by mole, based on 100% by mole of the diol component.

The content of the isosorbide or the recycled isosorbide contained in the diol component is not particularly limited, but it may be 1 to 50% by mole, specifically, 4 to 45% by mole, 7 to 40% by mole, 10 to 35% by mole, 13 to 30% by mole, or 16 to 25% by mole, based on 100% by mole of the diol component.

Meanwhile, the recycled monomers contained in the dicarboxylic acid component and the diol component (i.e., recycled terephthalic acid, recycled ethylene glycol, recycled diethylene glycol, recycled 1,4-cyclohexanedimethanol, recycled isosorbide, and recycled bis-2-hydroxyethyl terephthalate) may refer to recycled monomers obtained from used waste polyester resins or waste polyester products through a commonly known depolymerization process. Even when such recycled monomers are used, the present invention can provide a polyester resin with excellent thermal resistance and mechanical strength by optimizing the composition of the diol component.

According to the present invention, it can be confirmed that the polyester resin has high mechanical strength in terms of impact strength. For example, a specimen having a thickness of 3.2 mm prepared from the polyester resin may have an impact strength of 800 J/m or more. Specifically, the impact strength may be 810 J/m or more, 820 J/m or more, 830 J/m or more, 840 J/m or more, or 850 J/m or more (e.g., 800 to 860 J/m, 820 to 855 J/m, or 840 to 853 J/m).

According to the present invention, the polyester resin may have an intrinsic viscosity (melt intrinsic viscosity) (IV) of 0.64 to 0.78 dl/g. Specifically, the intrinsic viscosity may be 0.64 to 0.77 dl/g, 0.65 to 0.77 dl/g, 0.65 to 0.76 dl/g, 0.66 to 0.75 dl/g, or 0.68 to 0.74 dl/g. As the intrinsic viscosity of the polyester resin is within the above range, an article having the desired physical properties can be prepared while the moldability of the polyester resin is secured.

According to the present invention, the polyester resin can be evaluated as environmentally friendly when evaluated for the degree of environmental impact (e.g., global warming potential; GWP) through the life cycle assessment (LCA). Specifically, the polyester resin may have a greenhouse gas (GHG) emission of 1.5 kg $CO_2$/kg or less, 1.3 kg $CO_2$/kg or less, 1.2 kg $CO_2$/kg or less, 1.1 kg $CO_2$/kg or less, 1.07 kg $CO_2$/kg or less, 1.05 kg $CO_2$/kg or less, 1.03 kg $CO_2$/kg or less, or 1.02 kg $CO_2$/kg or less, when measured according to the ISO 14040 standard.

Meanwhile, according to the present invention, the polyester resin may further comprise a component derived from at least one additive selected from the group consisting of antioxidants, branching agents, colorants, crystallizing agents, catalysts, stabilizers, and ultraviolet absorbers.

The antioxidant is not particularly limited, but it may comprise at least one selected from the group consisting of hindered phenol-based compounds, phosphite-based compounds, and thioether-based compounds.

The branching agent may be a compound having three or more functional groups. Specifically, it may comprise at least one selected from the group consisting of trimellitic anhydride, trimellitic acid, pyromellitic dianhydride, glycerol, trimethylolpropane, pentaerythritol, citric acid, tartaric acid, and 3-hydroxyglutaric acid.

The colorant is not particularly limited, but it may comprise at least one selected from the group consisting of cobalt-based compounds, anthraquinone-based compounds, perinone-based compounds, azo-based compounds, and methine-based compounds. Specifically, the colorant may be cobalt acetate, cobalt propionate, Polysynthren Blue RLS toner from Clariant, and Solvaperm Red BB toner from Clariant.

The catalyst is not particularly limited, but it may comprise methylates of sodium and magnesium; acetates, borates, fatty acid salts, and carbonates of Zn, Cd, Mn, Co, Ca, and Ba; or oxides of Mg, Pb, Mn, Ti, Sb, Sn, Al, and Ge, or hydrates thereof. Specifically, the catalyst may be tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethyl acetoacetic ester titanate, isostearyl titanate, titanium dioxide, germanium dioxide, germanium tetrachloride, germanium ethyleneglycoxide, germanium acetate, or combinations thereof.

The stabilizer is not particularly limited, but it may comprise a phosphorus-based compound such as phosphoric acid, trimethyl phosphate, and triethyl phosphate.

According to the present invention, the polyester resin may be in the form of chips, pellets, or powder.

In addition, the polyester resin may be a homopolymer or a copolymer. Specifically, the polyester resin may be selected from the group consisting of polyethylene terephthalate (PET), polyethylene terephthalate glycol (PETG), polyester sulfone (PES), polybutylene terephthalate (PBT), polytrimethylene terephthalate (PTT), polybutylene adipate-co-terephthalate (PBAT), polypropylene adipate-co-terephthalate (PPAT), polycyclohexane dimethyl terephthalate (PCT), and thermoplastic polyester elastomer (TPEE).

## Process for preparing a polyester resin

The polyester resin according to the present invention may be prepared through an esterification reaction, or a transesterification reaction, followed by a polycondensation reaction, as commonly known. Specifically, the process for preparing a polyester resin according to the present invention may comprise feeding a diol component and a dicarboxylic acid component to a reactor (S-1); subjecting the diol component and the dicarboxylic acid component to an esterification reaction to prepare an oligomer (S-2); and subjecting the oligomer to a polycondensation reaction (S-3).

According to the present invention, step (S-1) is a step of feeding a diol component and a dicarboxylic acid component to a reactor. Since the diol component and the dicarboxylic acid component are the same as described above, a description thereon is omitted.

When the diol component and the dicarboxylic acid component are fed to a reactor, the feeding molar ratio thereof (the number of moles of the diol component / the number of moles of the dicarboxylic acid component) is not particularly limited, but it may be 1.05 to 1.30, 1.07 to 1.28, 1.09 to 1.26, 1.11 to 1.24, or 1.13 to 1.22, in light of the efficiency of the esterification reaction and polycondensation reactions described later.

A batch reactor or a continuous reactor may be used as the reactor.

In addition, at least one additive selected from the group consisting of antioxidants, branching agents, colorants, crystallizing agents, catalysts, stabilizers, and ultraviolet absorbers may be further fed to the reactor.

According to the present invention, step (S-2) is a step of subjecting the diol component and the dicarboxylic acid component to an esterification reaction to prepare an oligomer. The conditions under which the esterification reaction is carried out may not be particularly limited.

Specifically, the temperature at which the esterification reaction is carried out may be 220 to 300°C, 225 to 290°C, 230 to 285°C, 235 to 280°C, 240 to 275°C, or 250 to 270°C. In addition, the pressure at which the esterification reaction is carried out may be 0.1 to 5 kgf/cm$^2$, 0.1 to 4 kgf/cm$^2$, 0.3 to 3 kgf/cm$^2$, 0.5 to 2 kgf/cm$^2$, or 1 to 2 kgf/cm$^2$. As the esterification reaction is carried out under the above conditions, the production of side reactants is minimized while an oligomer having the desired molecular weight can be obtained in high yield.

According to the present invention, step (S-3) is a step of subjecting the oligomer to a polycondensation reaction. The conditions under which the polycondensation reaction is carried out may not be particularly limited.

Specifically, the temperature at which the polycondensation reaction is carried out may be 250 to 320°C, 255 to 310°C, 260 to 300°C, 265 to 290°C, or 270 to 285°C. In addition, the conditions under which the polycondensation reaction is carried out may be lower (reduced pressure) than normal pressure (e.g., 1 atm). As the polycondensation reaction is performed under the above conditions, a polyester resin (polymer) having crystallinity and ensuring moldability can be efficiently produced.

Meanwhile, if necessary, the process for preparing a polyester resin according to the present invention may further comprise subjecting the reactant obtained through the polycondensation reaction in step (S-3) to a solid-state polymerization reaction in order to control the intrinsic viscosity (IV), molecular weight, and the like of the reactant. The solid-state polymerization reaction conditions are not particularly limited and may be appropriately set depending on the intrinsic viscosity, molecular weight, and the like of the desired polyester resin.

**Article**

The article according to the present invention is prepared from the polyester resin described above. Specifically, the polyester resin may be subjected to a molding process to produce articles with various shapes and uses. Since these articles are prepared from the polyester resin described above, they may have excellent thermal resistance and mechanical strength.

The method of molding the polyester resin to produce the article is not particularly limited as long as it is a commonly known method. Specific examples include injection molding, extrusion molding, press molding, vacuum molding, and blow molding.

These articles may be containers, films, sheets, or interior and exterior materials. Specifically, they may be food containers or packaging films that require high thermal resistance and mechanical strength.

**Mode for the Invention**

Hereinafter, the present invention will be described in more detail with reference to embodiments. However, these examples are provided only for illustration purposes, and the present invention is not limited thereto.

**[Example 1]**

A 10-liter reactor equipped with a column and a condenser that can be cooled by water was charged with terephthalic acid (TPA, 2,494.4 g), ethylene glycol (EG, 149.1 g), 1,4-cyclohexanedimethanol (CHDM, 1,514.7 g), isosorbide (ISB, 745.9 g), a Ge catalyst (16.9 g), and a stabilizer (8.7 g). Next, the temperature of the reactor was raised to 270°C, and an esterification reaction (ES) was then carried out at 270°C and a pressure of 0.5 kgf/cm$^2$ to obtain a transparent reactant.

Subsequently, the reactant was transferred to a polycondensation reactor, and a polycondensation reaction (PA) was then carried out at 280°C while the pressure of the polycondensation reactor was maintained at a pressure lower than normal pressure. When the intrinsic viscosity (IV) of the reactant in the polycondensation reactor reached 0.65 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Example 2]**

A 10-liter reactor equipped with a column and a condenser that can be cooled by water was charged with terephthalic acid (TPA, 2,217.7 g), ethylene glycol (EG, 248.5 g), 1,4-cyclohexanedimethanol (CHDM, 1,365.9 g), isosorbide (ISB, 546.1 g), a Ge catalyst (9.0 g), and a stabilizer (3.8 g). Next, the temperature of the reactor was raised to 258°C, and an esterification reaction (ES) was then carried out at 258°C and a pressure of 2 kgf/cm$^2$ to obtain a transparent reactant.

Subsequently, the reactant was transferred to a polycondensation reactor, and a polycondensation reaction (PA) was then carried out at 270°C while the pressure of the polycondensation reactor was maintained at a pressure lower than normal pressure. When the intrinsic viscosity (IV) of the reactant in the polycondensation reactor reached 0.75 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Example 3]**

A 10-liter reactor equipped with a column and a condenser that can be cooled by water was charged with terephthalic acid (TPA, 2,565.8 g), ethylene glycol (EG, 287.5 g), 1,4-cyclohexanedimethanol (CHDM, 1,224.2 g), isosorbide (ISB, 812.4 g), a Ge catalyst (12.5 g), and a stabilizer (2.8 g). Next, the temperature of the reactor was raised to 265°C, and an esterification reaction (ES) was then carried out at 265°C and a pressure of 1 kgf/cm$^2$ to obtain a transparent reactant.

Subsequently, the reactant was transferred to a polycondensation reactor, and a polycondensation reaction (PA) was then carried out at 270°C while the pressure of the polycondensation reactor was maintained at a pressure lower than normal pressure. When the intrinsic viscosity (IV) of the reactant in the polycondensation reactor reached 0.65 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Example 4]**

A 10-liter reactor equipped with a column and a condenser that can be cooled by water was charged with terephthalic acid (TPA, 2,968.6 g), 1,4-cyclohexanedimethanol (CHDM, 1,982.9 g), 2,2,4,4-tetramethyl-1,3-cyclobutanediol (TMCBD, 901.3 g), a Ge catalyst (15.7 g), and a stabilizer (1.8 g). Next, the temperature of the reactor was raised to 265°C, and an esterification reaction (ES) was then carried out at 265°C and a pressure of 1.5 kgf/cm$^2$ to obtain a transparent reactant.

Subsequently, the reactant was transferred to a polycondensation reactor, and a polycondensation reaction (PA) was then carried out at 272°C while the pressure of the polycondensation reactor was maintained at a pressure lower than normal pressure. When the intrinsic viscosity (IV) of the reactant in the polycondensation reactor reached 0.75 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Example 5]**

A 10-liter reactor equipped with a column and a condenser that can be cooled by water was charged with terephthalic acid (TPA, 2,486.0g), 1,4-cyclohexanedimethanol (CHDM, 1,466.4 g), isosorbide (ISB, 699.7 g), recycled bis-2-hydroxyethyl terephthalate (r-BHET, 380.4 g), a Ge catalyst (12.5 g), and a stabilizer (6.5 g). Next, the temperature of the reactor was raised to 265°C, and an esterification reaction (ES) was then carried out at 265°C and a pressure of 1 kgf/cm$^2$ to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (IV) of the reactant in the polycondensation reactor reached 0.73 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Comparative Example 1]**

A 10-liter reactor equipped with a column and a condenser that can be cooled by water was charged with terephthalic acid (TPA, 3,007.2 g), ethylene glycol (EG, 1,010.9 g), 1,4-cyclohexanedimethanol (CHDM, 782.6 g), isosorbide (ISB, 238.0 g), a Ge catalyst (6.1 g), and a stabilizer (1.4 g). Next, the temperature of the reactor was raised to 255°C, and an esterification reaction (ES) was then carried out at 255°C and a pressure of 2 kgf/cm$^2$ to obtain a

transparent reactant.

Subsequently, the reactant was transferred to a polycondensation reactor, and a polycondensation reaction (PA) was then carried out at 265°C while the pressure of the polycondensation reactor was maintained at a pressure lower than normal pressure. When the intrinsic viscosity (IV) of the reactant in the polycondensation reactor reached 0.75 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Comparative Example 2]**

A 10-liter reactor equipped with a column and a condenser that can be cooled by water was charged with terephthalic acid (TPA, 2,674.9 g), ethylene glycol (EG, 539.5 g), 1,4-cyclohexanedimethanol (CHDM, 812.1 g), isosorbide (ISB, 847.0 g), a Ge catalyst (8.8 g), and a stabilizer (3.3 g). Next, the temperature of the reactor was raised to 265°C, and an esterification reaction (ES) was then carried out at 265°C and a pressure of 1 kgf/cm$^2$ to obtain a transparent reactant.

Subsequently, the reactant was transferred to a polycondensation reactor, and a polycondensation reaction (PA) was then carried out at 275°C while the pressure of the polycondensation reactor was maintained at a pressure lower than normal pressure. When the intrinsic viscosity (IV) of the reactant in the polycondensation reactor reached 0.64 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Comparative Example 3]**

A 10-liter reactor equipped with a column and a condenser that can be cooled by water was charged with terephthalic acid (TPA, 2,341.2 g), ethylene glycol (EG, 288.6 g), 1,4-cyclohexanedimethanol (CHDM, 974.9 g), isosorbide (ISB, 864.8 g), a Ge catalyst (10.3 g), and a stabilizer (2.5 g). Next, the temperature of the reactor was raised to 262°C, and an esterification reaction (ES) was then carried out at 262°C and a pressure of 1 kgf/cm$^2$ to obtain a transparent reactant.

Subsequently, the reactant was transferred to a polycondensation reactor, and a polycondensation reaction (PA) was then carried out at 270°C while the pressure of the polycondensation reactor was maintained at a pressure lower than normal pressure. When the intrinsic viscosity (IV) of the reactant in the polycondensation reactor reached 0.60 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Comparative Example 4]**

A 10-liter reactor equipped with a column and a condenser that can be cooled by water was charged with terephthalic acid (TPA, 2,287.9 g), ethylene glycol (EG, 153.8 g), 1,4-cyclohexanedimethanol (CHDM, 1,647.3 g), isosorbide (ISB, 362.2 g), a Ge catalyst (9.5 g), and a stabilizer (4 g). Next, the temperature of the reactor was raised to 267°C, and an esterification reaction (ES) was then carried out at 267°C and a pressure of 1 kgf/cm$^2$ to obtain a transparent reactant.

Subsequently, the reactant was transferred to a polycondensation reactor, and a polycondensation reaction (PA) was then carried out at 285°C while the pressure of the polycondensation reactor was maintained at a pressure lower than normal pressure. When the intrinsic viscosity (IV) of the reactant in the polycondensation reactor reached 0.70 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Comparative Example 5]**

A 10-liter reactor equipped with a column and a condenser that can be cooled by water was charged with terephthalic acid (TPA, 2,596.1 g), ethylene glycol (EG, 77.6 g), 1,4-cyclohexanedimethanol (CHDM, 1,756.6 g), isosorbide (ISB, 570.8 g), a Ge catalyst (13.4 g), and a stabilizer (6.1 g). Next, the temperature of the reactor was raised to 263°C, and an esterification reaction (ES) was then carried out at 263°C and a pressure of 1 kgf/cm2 to obtain a transparent reactant.

Subsequently, the reactant was transferred to a polycondensation reactor, and a polycondensation reaction (PA) was then carried out at 282°C while the pressure of the polycondensation reactor was maintained at a pressure lower than normal pressure. When the intrinsic viscosity (IV) of the reactant in the polycondensation reactor reached 0.68 dl/g, the reactant was then discharged to the outside of the polycondensation reactor to form strands. Thereafter, the strands were solidified with a cooling liquid and then granulated to have an average weight of about 12 to 14 mg to prepare a polyester resin.

**[Test Example 1]**

The polyester resins prepared in the Examples and Comparative Examples were each analyzed by differential scanning calorimetry (DSC) to determine whether a melting point ($T_m$) appeared. Here, the DSC analysis of the polyester resin was carried out as follows.
DSC analysis device: DSC 1 model of Mettler Toledo was used.
Sample preparation: About 6-10 mg of a polyester resin was taken and filled into an aluminum pan.
Scan conditions: The procedure of raising the temperature from room temperature to 280°C at a rate of 10°C/minute under a nitrogen atmosphere, lowering the temperature to 30°C at a rate of -300°C/minute, and then raising the temperature again to 280°C at a rate of 2°C/minute was carried out to obtain a DSC curve. Thereafter, the temperature at which an endothermic peak appeared during the temperature elevation procedure in the obtained DSC curve was defined as the melting point ($T_m$). In addition, the heat of fusion ($\Delta H$) was calculated from the melting point ($T_m$).

**[Test Example 2]**

The polyester resins prepared in the Examples and Comparative Examples were each injection-molded at a temperature of 250 to 300°C to prepare a specimen with a thickness of 3 mm (a length of 17.5 mm and a width of 12.5 mm). The specimen thus prepared was subjected to dynamic mechanical analysis (DMA) (Q800 from TA Instrument) at a rate of 10°C/minute from 30°C to 150°C in a single cantilever mode to obtain a tan $\delta$ curve. Thereafter, the temperature at the maximum value (tan $\delta$ peak) of the obtained tan $\delta$ curve was confirmed, which was defined as the thermal resistance of the polyester resin.

**[Test Example 3]**

The polyester resins prepared in the Examples and Comparative Examples were each injection-molded at a temperature of 250 to 300°C to prepare a specimen with a thickness of 1 mm (a length of 17.5 mm and a width of 12.5 mm). The specimen thus prepared was subjected to dynamic mechanical analysis (DMA) (Q800 from TA Instrument) (in a stress relaxation mode) to calculate strain recovery (SR) according to the following Equation 2.

$$[Equation\ 2]$$
$$SR\ (\%) = \{1 - (S_2 - S_0/S_1 - S_0)\} \times 100$$

In Equation 2, $S_0$ is the initial length of a specimen having a thickness of 1 mm prepared from the polyester resin, $S_1$ is the length of the specimen measured when the specimen is maintained for 3 minutes with a force applied such that the length of the specimen is stretched by 3% at a temperature of the glass transition temperature ($T_g$) of the polyester resin less 30°C, and $S_2$ is the length of the specimen measured after the force applied to the specimen is removed, and the specimen is then left for 5 minutes.

**[Test Example 4]**

The polyester resins prepared in the Examples and Comparative Examples were each injection-molded at a temperature of 250 to 300°C to prepare a specimen with a thickness of 3.2 mm (a length of 63.3 mm and a width of 12.5 mm). It was measured for impact strength (J/m) according to ASTM D256 and then evaluated according to the following criteria. NO. 258 PC-S IMPACT TESTER (product name) of YASUDA SEIKI SEISAKUSHO (hammer capacity: 2.75 J) was used for the measurement of impact strength.

○: Impact strength of 800 J/m or more
✕: Impact strength of less than 800 J/m

**[Test Example 5]**

The polyester resins prepared in the Examples and Comparative Examples were each dissolved in ortho-chlorophenol (OCP) at 100°C at a concentration of 0.12%, and the intrinsic viscosity (IV, dl/g) was measured with an Ubbelohde viscometer in a thermostat at 35°C.

**[Test Example 6]**

The polyester resins prepared in the Examples and Comparative Examples were each injection-molded at a temperature of 250 to 300°C to prepare a specimen with a thickness of 1 mm (a length of 17.5 mm and a width of 12.5 mm). It was measured for moldability according to the following criteria.

∘: No screw fusion of the resin occurred during injection molding

×: Screw fusion of the resin occurred during injection molding

The evaluation results for the above Test Examples are summarized in Tables 1 and 2 below.

[Table 1]

| | | Ex. 1 | Ex. 2 | Ex. 3 | Ex. 4 | Ex. 5 |
|---|---|---|---|---|---|---|
| X | Content of CHDM (% by mole) in the diol component | 70 | 71 | 50 | 77 | 65 |
| Y | Molar ratio of trans-CHDM in CHDM | 0.77 | 0.69 | 0.67 | 0.71 | 0.73 |
| | Ratio of trans-CHDM (% by mole) in CHDM | 77 | 69 | 67 | 71 | 73 |
| | $X \times Y$ | 53.9 | 48.99 | 33.5 | 54.67 | 47.45 |
| | Intrinsic viscosity (dl/g) | 0.65 | 0.75 | 0.65 | 0.75 | 0.73 |
| | Temp. at tan $\delta$ peak (°C) | 118 | 109 | 115 | 117 | 114 |
| | $T_m$ (°C) | 246 | 246 | Not appeared | 250 | 244 |
| | $\Delta H$ at $T_m$ (J/g) | 10 | 11 | - | 1 | 2 |
| | SR (%) | 66.9 | 49.3 | 46 | 49 | 57.1 |
| | Impact strength (J/m) | ○ | ○ | ○ | ○ | ○ |
| | Moldability | ○ | ○ | ○ | ○ | ○ |

[Table 2]

| | | C. Ex. 1 | C. Ex. 2 | C. Ex. 3 | C. Ex. 4 | C. Ex. 5 |
|---|---|---|---|---|---|---|
| X | Content of CHDM (% by mole) in the diol component | 30 | 35 | 45 | 83 | 78 |
| Y | Molar ratio of trans-CHDM in CHDM | 0.75 | 0.67 | 0.60 | 0.75 | 0.85 |
| | Ratio of trans-CHDM (% by mole) in CHDM | 75 | 67 | 60 | 75 | 85 |
| | $X \times Y$ | 22.5 | 23.45 | 27.0 | 62.25 | 66.3 |
| | Intrinsic viscosity (dl/g) | 0.75 | 0.64 | 0.60 | 0.70 | 0.68 |
| Temp. at tan $\delta$ peak (°C) | 90 | 109 | 110 | 105 | 117 |
| $T_m$ (°C) | Not appeared | Not appeared | Not appeared | 257 | 259 |
| $\Delta H$ at $T_m$ (J/g) | - | - | - | 40 | 36 |
| SR (%) | 15 | 37 | 40 | 51 | 60 |
| Impact strength (J/m) | × | × | × | ○ | ○ |
| Moldability | ○ | ○ | ○ | × | × |

Referring to Tables 1 and 2 above, the polyester resins of Examples 1 to 5 according to the present invention had a high temperature at the tan $\delta$ peak while the value of X $\times$ Y and SR were controlled to the ranges desired in the present invention, whereby they were excellent in thermal resistance and mechanical properties. In addition, $T_m$ was controlled to 250°C or lower; thus, the moldability was excellent. Accordingly, when articles are manufactured using the polyester resin according to the present invention, it is expected that articles that have excellent thermal resistance and mechanical strength and are environmentally friendly can be produced with high efficiency.

In contrast, the polyester resins of Comparative Examples 1 to 5 had a value of X $\times$ Y that was not controlled to the range desired in the present invention, whereby the thermal resistance, mechanical strength, or moldability was poor. Specifically, the polyester resins of Comparative Examples 1 to 3 had an SR falling outside the range desired in the present invention, whereby the mechanical strength was significantly poor. In addition, the polyester resins of Comparative Examples 4 and 5 had an excessively high $T_m$, indicating poor moldability.

**Claims**

1. A polyester resin, which comprises a diol repeat unit derived from a diol component; and a dicarboxylic acid repeat unit derived from a dicarboxylic acid component, wherein when a value of tan $\delta$ is measured through dynamic mechanical analysis (DMA), the temperature at the maximum value of tan $\delta$ (tan $\delta$ peak) is 100°C or higher, and the following Equation 1 is satisfied:

[Equation 1]

$$30 \leq X \times Y \leq 60$$

   in Equation 1, X is the percent by mole of 1,4-cyclohexanedimethanol (CHDM) based on 100% by mole of the diol component, and Y is the molar ratio of trans-1,4-cyclohexanedimethanol (trans-CHDM) to the 1,4-cyclohexanedimethanol (CHDM).

2. The polyester resin of claim 1, wherein the strain recovery (SR) according to the following Equation 2 exceeds 45%:

[Equation 2]

$$SR\ (\%) = \{1 - (S_2 - S_0/S_1 - S_0)\} \times 100$$

   in Equation 2, $S_0$ is the initial length of a specimen having a thickness of 1 mm prepared from the polyester resin, $S_1$ is the length of the specimen measured when the specimen is maintained for 3 minutes with a force applied such that the length of the specimen is stretched by 3% at a temperature of the glass transition temperature ($T_g$) of the polyester resin less 30°C, and
   $S_2$ is the length of the specimen measured after the force applied to the specimen is removed, and the specimen is then left for 5 minutes.

3. The polyester resin of claim 1, wherein when analyzed by differential scanning calorimetry (DSC), its melting point ($T_m$) does not appear, or its melting point ($T_m$) appears at 250°C or lower.

4. The polyester resin of claim 1, wherein the 1,4-cyclohexanedimethanol contained in the diol component comprises trans-1,4-cyclohexanedimethanol (trans-CHDM) and cis-1,4-cyclohexanedimethanol (cis-CHDM) at a content ratio of 60:40 to 85:15.

5. The polyester resin of claim 1, wherein a specimen having a thickness of 3.2 mm prepared from the polyester resin has an impact strength of 800 J/m or more.

6. The polyester resin of claim 1, which has an intrinsic viscosity (IV) of 0.64 to 0.78 dl/g.

7. The polyester resin of claim 1, wherein the dicarboxylic acid component comprises at least one selected from the group consisting of terephthalic acid, recycled terephthalic acid, dimethyl terephthalic acid, isophthalic acid, dimethyl terephthalate, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, 2,6-naphthalenedicarboxylic acid, diphenyldicarboxylic acid, 4,4'-stilbenedicarboxylic acid, 2,5-furandicarboxylic acid, and 2,5-thiophenedicarboxylic acid.

8. The polyester resin of claim 1, wherein the diol component comprises at least one selected from the group consisting of ethylene glycol, recycled ethylene glycol, diethylene glycol, recycled diethylene glycol, 1,4-cyclohexanedimethanol, recycled 1,4-cyclohexanedimethanol, isosorbide, recycled isosorbide, bis-2-hydroxyethyl terephthalate, recycled bis-2-hydroxyethyl terephthalate, triethylene glycol, 1,2-propanediol, 1,3-propanediol, 1,4-propanediol, 1,5-pentanediol, 1,6-hexanediol, 1,8-octanediol, 2-methyl-1,3-propanediol, neopentyl glycol, 2,2,4,4-tetramethyl-1,3-cyclobutanediol, and their derivatives.

9. The polyester resin of claim 1, wherein the diol component comprises 1,4-cyclohexanedimethanol in an amount of 45 to 85% by mole based on 100% by mole of the diol component.

10. An article, which is prepared from the polyester resin according to any one of claims 1 to 9.

## INTERNATIONAL SEARCH REPORT

| International application No. |
|---|
| **PCT/KR2024/003190** |

| A. | CLASSIFICATION OF SUBJECT MATTER |
|---|---|

**C08G 63/199**(2006.01)i; **C08G 63/183**(2006.01)i; **C08G 63/672**(2006.01)i

According to International Patent Classification (IPC) or to both national classification and IPC

| B. | FIELDS SEARCHED |
|---|---|

Minimum documentation searched (classification system followed by classification symbols)

C08G 63/199(2006.01); B01J 23/62(2006.01); B29C 55/12(2006.01); B60Q 1/04(2006.01); C07C 29/149(2006.01);
C08G 63/183(2006.01); C08G 63/672(2006.01); C08G 69/44(2006.01); C08J 7/00(2006.01); C08L 67/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르 수지 (polyester resin), 디카르복실산 (dicarboxylic acid), 디올 (diol), 1,4-사이클로헥산디메탄올 (1,4-cyclohexanedimethanol, CHDM), 트랜스-1,4-사이클로헥산디메탄올 (trans-CHDM), 시스-1,4-사이클로헥산디메탄올 (cis-CHDM), 동적 기계 분석 (Dynamic Mechanical Analyzer, DMA)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2018-0129438 A (SK CHEMICALS CO., LTD.) 05 December 2018 (2018-12-05)<br>See claim 8; and paragraphs [0021]-[0024], [0038], [0043] and [0046]. | 1-10 |
| A | KR 10-2023-0095526 A (SK CHEMICALS CO., LTD.) 29 June 2023 (2023-06-29)<br>See claim 1; and paragraph [0076]. | 1-10 |
| A | KR 10-2022-0151878 A (SK CHEMICALS CO., LTD.) 15 November 2022 (2022-11-15)<br>See paragraphs [0214] and [0296]. | 1-10 |
| A | JP 2023-049227 A (TORAY CELANESE CO., LTD.) 10 April 2023 (2023-04-10)<br>See paragraphs [0030] and [0039]. | 1-10 |
| A | KR 10-2021-0084310 A (HANWHA SOLUTIONS CORPORATION) 07 July 2021 (2021-07-07)<br>See paragraphs [0147] and [0148]. | 1-10 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 October 2024** | **07 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/003190**

| Patent document cited in search report | | | Publication date (day/month/year) | Patent family member(s) | | | Publication date (day/month/year) |
|---|---|---|---|---|---|---|---|
| KR | 10-2018-0129438 | A | 05 December 2018 | None | | | |
| KR | 10-2023-0095526 | A | 29 June 2023 | TW | 202336080 | A | 16 September 2023 |
| | | | | WO | 2023-121283 | A1 | 29 June 2023 |
| KR | 10-2022-0151878 | A | 15 November 2022 | JP | 2024-518401 | A | 01 May 2024 |
| | | | | TW | 202307081 | A | 16 February 2023 |
| | | | | US | 2024-0166814 | A1 | 23 May 2024 |
| | | | | WO | 2022-235008 | A1 | 10 November 2022 |
| JP | 2023-049227 | A | 10 April 2023 | None | | | |
| KR | 10-2021-0084310 | A | 07 July 2021 | CN | 114901618 | A | 12 August 2022 |
| | | | | CN | 114929657 | A | 19 August 2022 |
| | | | | CN | 114929658 | A | 19 August 2022 |
| | | | | CN | 114945546 | A | 26 August 2022 |
| | | | | EP | 4082998 | A1 | 02 November 2022 |
| | | | | EP | 4082998 | A4 | 28 February 2024 |
| | | | | EP | 4082999 | A1 | 02 November 2022 |
| | | | | EP | 4083000 | A1 | 02 November 2022 |
| | | | | EP | 4083000 | A4 | 21 February 2024 |
| | | | | EP | 4083001 | A1 | 02 November 2022 |
| | | | | EP | 4083001 | A4 | 28 February 2024 |
| | | | | JP | 2023-508200 | A | 01 March 2023 |
| | | | | JP | 2023-508201 | A | 01 March 2023 |
| | | | | JP | 2023-508204 | A | 01 March 2023 |
| | | | | JP | 2023-508205 | A | 01 March 2023 |
| | | | | KR | 10-2021-0084309 | A | 07 July 2021 |
| | | | | KR | 10-2021-0084311 | A | 07 July 2021 |
| | | | | KR | 10-2021-0084312 | A | 07 July 2021 |
| | | | | KR | 10-2670911 | B1 | 30 May 2024 |
| | | | | KR | 10-2691430 | B1 | 02 August 2024 |
| | | | | KR | 10-2691431 | B1 | 02 August 2024 |
| | | | | US | 2023-0040175 | A1 | 09 February 2023 |
| | | | | US | 2023-0049802 | A1 | 16 February 2023 |
| | | | | US | 2023-0053503 | A1 | 23 February 2023 |
| | | | | US | 2023-0054241 | A1 | 23 February 2023 |
| | | | | WO | 2021-132876 | A1 | 01 July 2021 |
| | | | | WO | 2021-133136 | A1 | 01 July 2021 |
| | | | | WO | 2021-133137 | A1 | 01 July 2021 |
| | | | | WO | 2021-133138 | A1 | 01 July 2021 |

Form PCT/ISA/210 (patent family annex) (July 2022)